# EUROPEAN PATENT APPLICATION

(11) **EP 3 714 684 A1**
(43) Date of publication of application: **30.09.2020**
(21) Application number: 19165459.9
(22) Date of filing: 27.03.2019
(51) Int. Cl.: A01K 1/01

(54) **AUTOMATIC CAT LITTER BOX CLEANSING STRUCTURE**

(71) Applicant: MoDoDo Co. Ltd, Taipei City 11491 (TW)
(72) Inventor: HUANG, Chia-Ho, 11491 Taipei City (TW)
(74) Representative: Viering, Jentschura & Partner mbB Patent- und Rechtsanwälte

(57) **Abstract**

An automatic cat litter box cleansing structure (100) includes a base (10) on where the cat litter box (11) is disposed; a horizontal movement module (20) movably disposed on the base (10) and transversely moving along the area in which the cat litter box (11) is disposed; a vertical movement module (30) movably disposed on the horizontal movement module (20) and longitudinally move with respect to the horizontal movement module (20). With the control module (40) controlling the horizontal movement module (20) and the vertical movement module (30) to move, the shoveling member (31) automatically shovels the cat feces away from the cat litter box (11), achieving an automatic cleansing function.

## Description

### BACKGROUND OF THE INVENTION

### 1. Field of the Invention:

The present invention relates to cat litter box cleansing devices, and more particularly, to an automatic cat litter box cleansing structure.

### 2. Description of the Related Art:

For any houses having a pet cat, a cat litter box is usually a must. With cat litters placed in the cat litter box, the cat gets used to excrete feces on the cat litters, so as to facilitate the subsequent cleansing task. When cleansing the cat litter box, the user often has to manually cleanse the litter, including cleaning away the feces on the used cat litters and replenishing new cat litters. However, the manually cleansing process is troublesome for the user. Also, when the user forgets to cleanse the cat litter box, an environmental odor will be produced.

Referring to TWM430838, a manual reversing device for cleansing cat litter is disclosed. With a holder as a pivot, the main body rotates by 90 degrees for gathering the cat feces to the filtering device, and rotates by 180 degrees for discharging the feces out of the main body; also, dust of the cat litters in the cat litter will fall onto the movable plate of the holder, thus achieving a semi-automatic cat litter cleansing function. However, a manual rotation of the main body is still needed, failing to meet a comprehensive convenience of usage. Also, the user may still forget to carry out the cleansing job.

Therefore, it is desirable to resolve the aforementioned issues occurring when cleansing a conventional cat litter box.

### SUMMARY OF THE INVENTION

For improving the issues above, an automatic cat litter box cleansing structure is disclosed. With a control module controlling the movements of a horizontal movement module and a vertical movement module, the shoveling member shovels the used cat litter in the cat litter box, so as to cleanse the cat feces out of the cat litter box.

An automatic cat litter box cleansing structure in accordance with an embodiment of the present invention comprises:
a base on which a cat litter box is disposed;
a horizontal movement module movably disposed on the base, so as to transversely move in a region in which the cat litter box is disposed;
a vertical movement module movably disposed on the horizontal movement module, so as to longitudinally move with respect to the horizontal movement module, the vertical movement module having a shoveling member; and
a control module applied for controlling the horizontal movement module and the vertical movement module to drive the shoveling member for shoveling an used cat litter in the cat litter box, thereby cleansing the used cat litter away from the cat litter box.

By use of the controlling module, the horizontal movement module is controlled to transversely move along the area of the cat litter box, and the vertical movement module is controlled to longitudinally move with respect to the horizontal movement module, such that the shoveling member is driven by the horizontal movement module to shovel the used cat litter away from the cat litter box, achieving an automatically cleansing effect and preventing environmental odor occurring from the used cat litter.

Preferably, a storage room is disposed beside the cat litter box for storing new cat litter for replenishment. Also, the storage room has a cat litter supplying module electrically connected to the control module for replenishing new cat litter stored in the storage room into the cat litter box.

Therefore, cat feces combined with the used cat litter are shoveled out of the cat litter box, and new cat litter is supplied into the cat litter box via the cat litter supplying module for maintaining a sufficient cat litter in the cat litter box.

### BRIEF DESCRIPTION OF THE DRAWINGS

**Fig. 1** is a perspective view of the automatic cat litter box cleansing structure in accordance with an embodiment of the present invention.
**Fig. 2** is an exploded view of the automatic cat litter box cleansing structure in accordance with an embodiment of the present invention.
**Fig. 3** is a schematic perspective view illustrating the installation of the horizontal movement module and the vertical movement module.
**Fig. 4** is an exploded view of the horizontal movement module and the vertical movement module.
**Fig. 5** is a schematic side view illustrating the installation of the horizontal movement module and the vertical movement module.
**Fig. 6** is a schematic view illustrating the shoveling member having the slide block in alignment with the control member and moving upward along with the vertical movement module.
**Fig. 7** is a schematic view illustrating the slide block in **Fig. 6** being pushed to the lower position by the control member.
**Fig. 8** is a schematic view illustrating the block member in alignment with the control member and vertically moving upward along with the vertical movement module, so as to leave the slide block.
**Fig. 9** is a structural block view of the circuit of the control module of the present invention.
**Fig. 10** is a schematic view illustrating the cat litter supplying module replenishing the cat litter into the cat litter box.
**Fig. 11** is a schematic view illustrating the block door being pushed to open by the transverse movement of the horizontal movement module, and the feces container being taken out from the base.
**Fig. 12** is a schematic view illustrating the shoveling member shoveling the cat litter in the cat litter box.
**Fig. 13** is a schematic view illustrating the shoveling member having the first shovel carrying out the shoveling motion at a shallow position.
**Fig. 14** is a schematic view illustrating the shoveling member having the second shovel carrying out the shoveling motion at a deep position.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

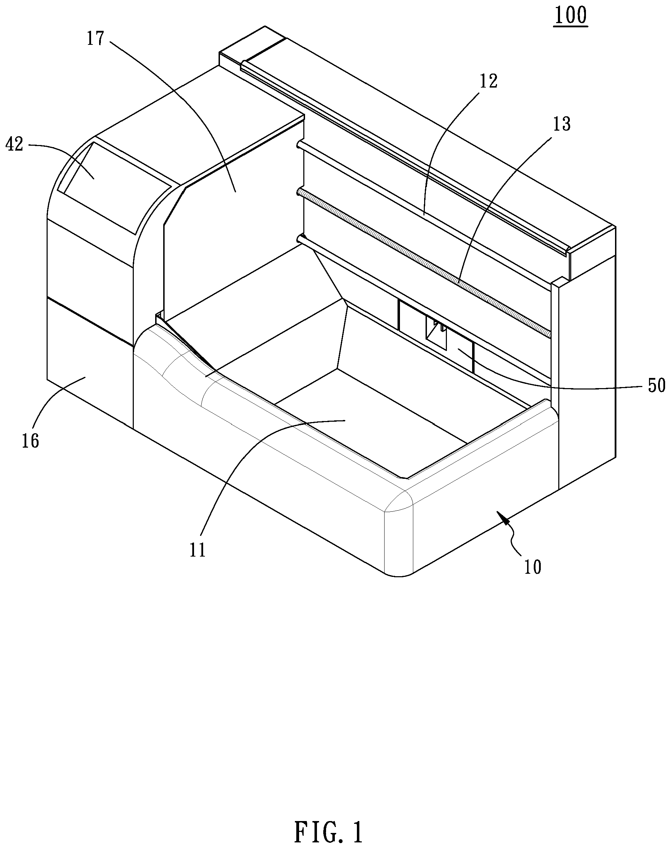

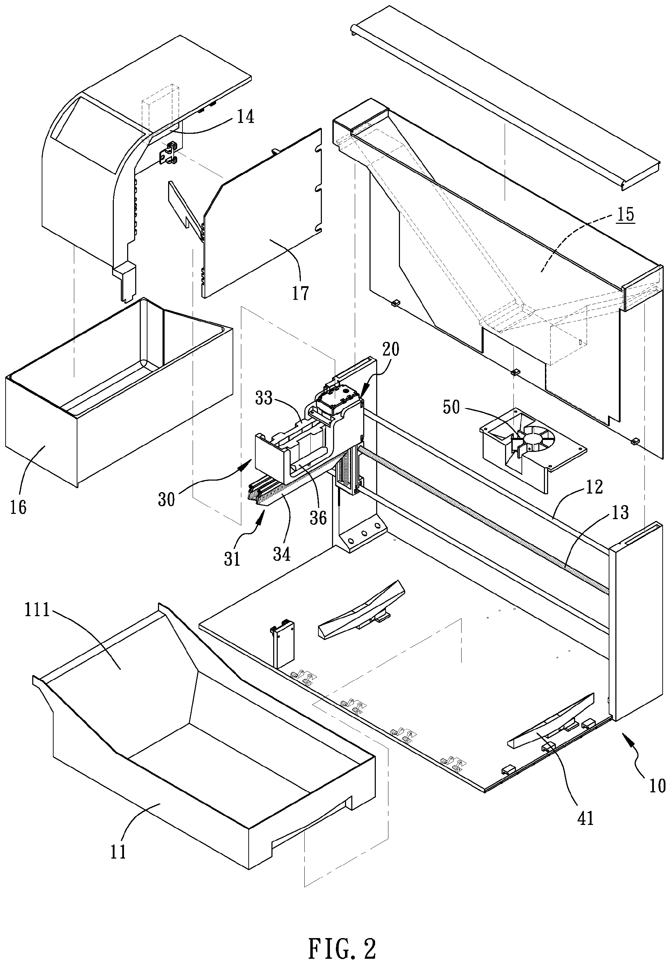

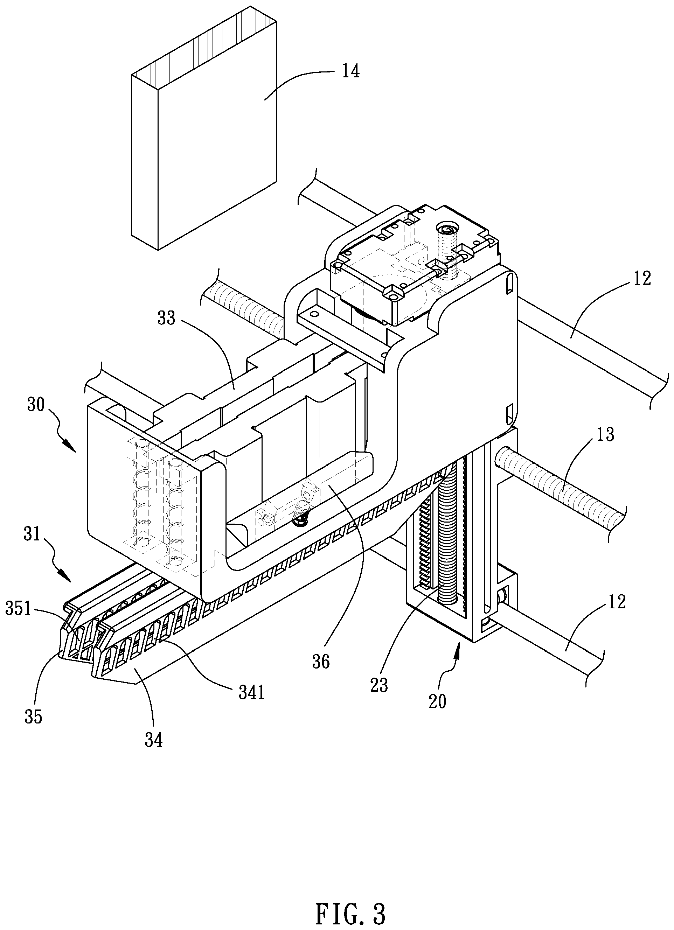

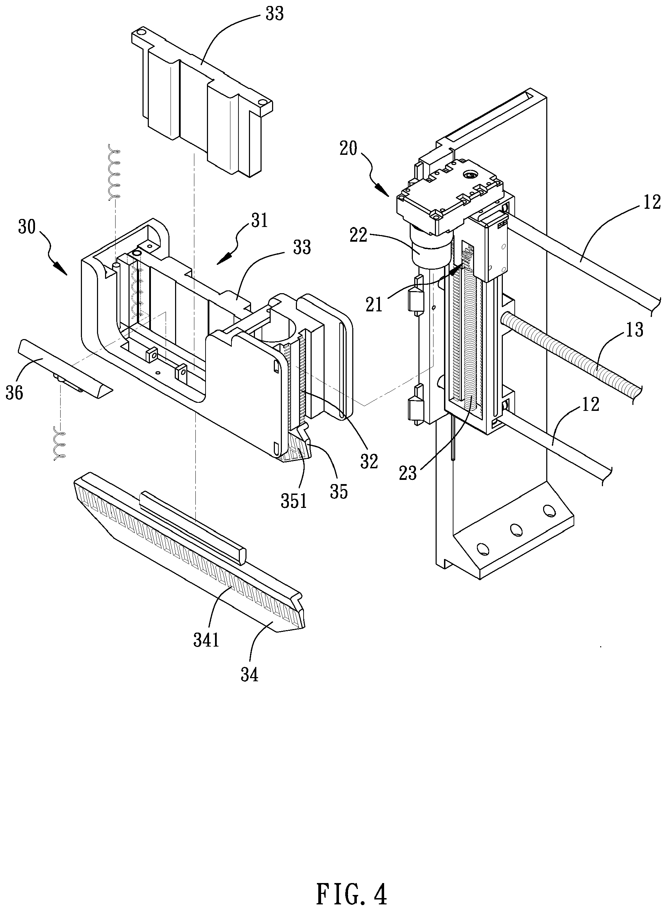

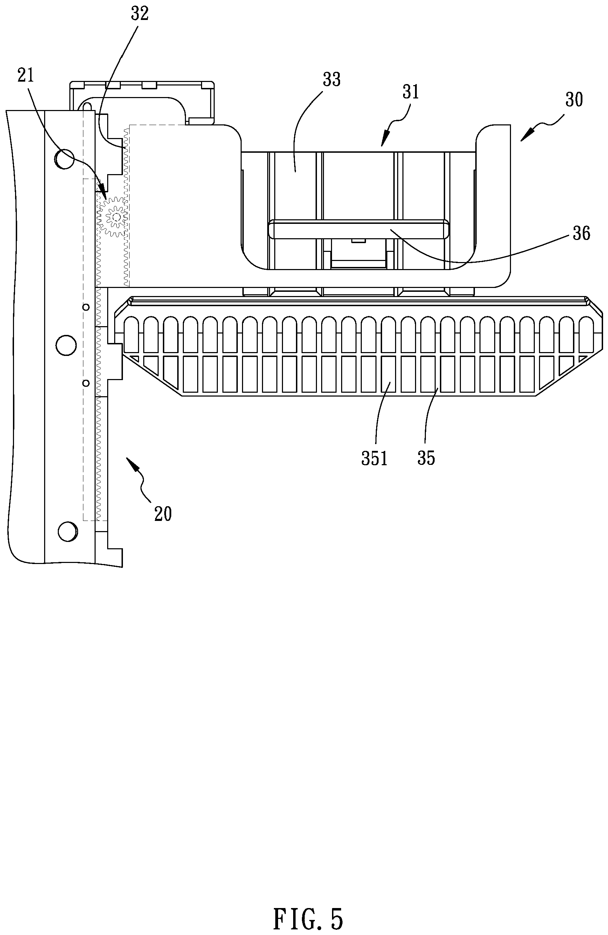

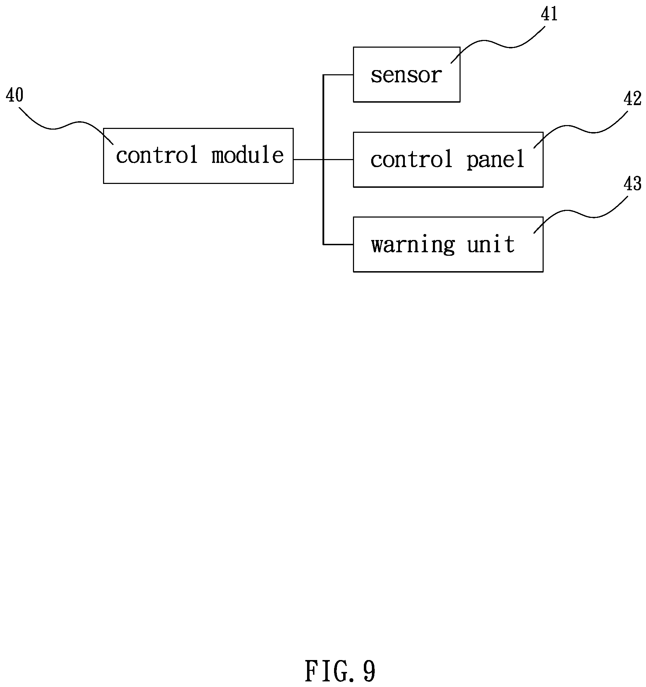

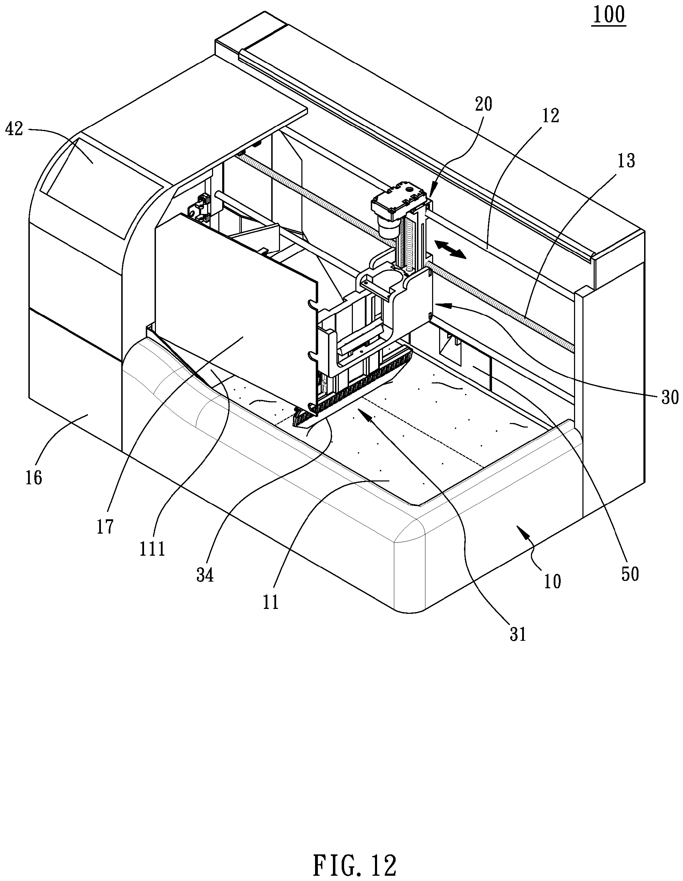

Referring to **Fig. 1** to **Fig. 14****,** an automatic cat litter box cleansing structure **100** comprises a base **10,** a horizontal movement module **20,** a vertical movement module **30,** and a control module **40.**

The base **10** is applied for holding a cat litter box **11** in which the cat litter is disposed, such that a cat is allowed to excrete feces in the cat litter box **11.** The horizontal movement module **20** is movably disposed on the base **10,** and the vertical movement module **30** is movably disposed on the horizontal movement module **20.** The horizontal movement module **20** is allowed to transversely move along an area in where the cat litter box **11** is disposed. The vertical movement module **30** is allowed to longitudinally move with respect to the horizontal movement module **20.** In an embodiment of the present invention, the vertical movement module **30** has two shoveling members **31.** Therefore, the two shoveling members **31** is able to longitudinally move along with the vertical movement module **30** and transversely move along with the horizontal movement module **20.** In other words, the two shoveling members **31** are allowed to be biaxially move in the base **10.** The control module **40** is applied for controlling the transverse movement of the horizontal movement module **20** and the longitudinal movement of the vertical movement module **30.** Under the control of the control module **40,** the shoveling members **31** are driven to shovel the used cat litter out, so as to cleanse the cat feces from the cat litter box **11.**

In an embodiment of the present invention, the base **10** has two transversely oriented guidance rods **12** on wherein the horizontal movement module **20** is disposed. Also, the horizontal movement module **20** is driven by a transverse thread rod **13,** such that the horizontal movement module **20** is allowed to transversely move on the two guidance rods **12.** Preferably, the horizontal movement module **20** is driven to rotate clockwise or counterclockwise by the transverse thread rod **13** which is motivated by a motor **231** (not shown).

In an embodiment of the present invention, the horizontal movement module **20** has a gear set **21,** and the vertical movement module **30** has a teeth row **32,** such that the teeth row **32** is geared by the gear set **21,** whereby the gear set **21** motivates the teeth row **32** for driving the vertical movement module **30** to longitudinally move. Preferably, the gear set **21** is driven to rotate clockwise or counterclockwise by a longitudinal thread rod **23** motivated by the motor **22.**

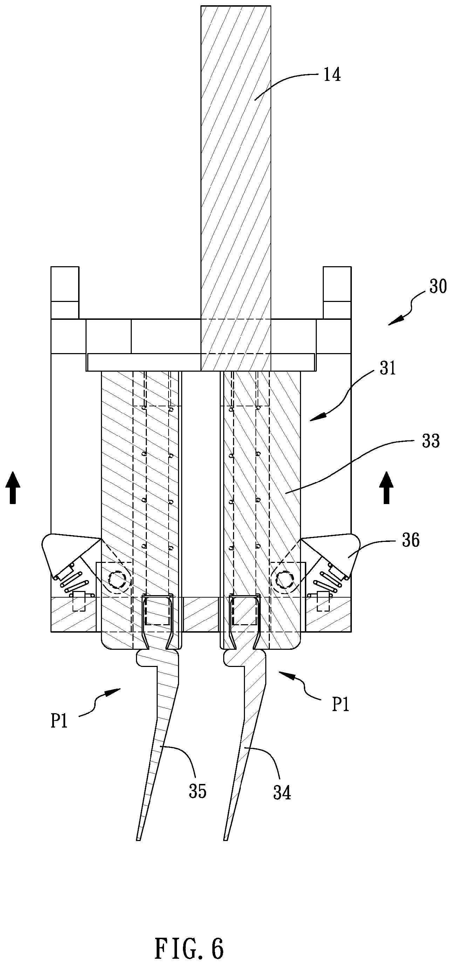

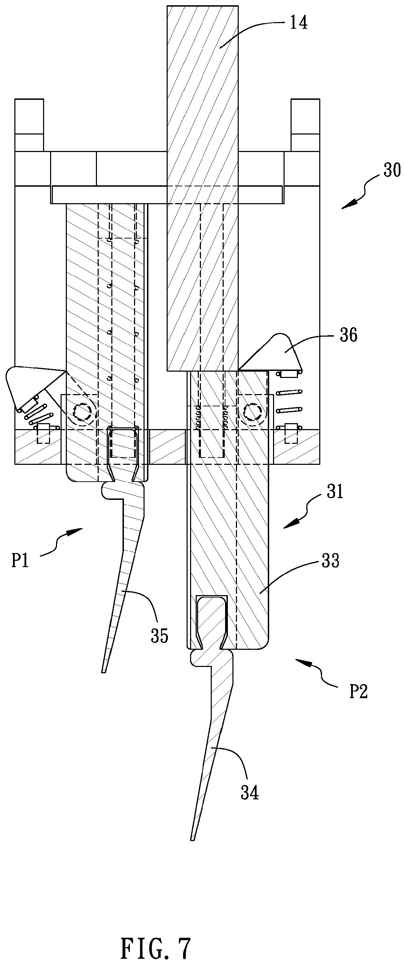

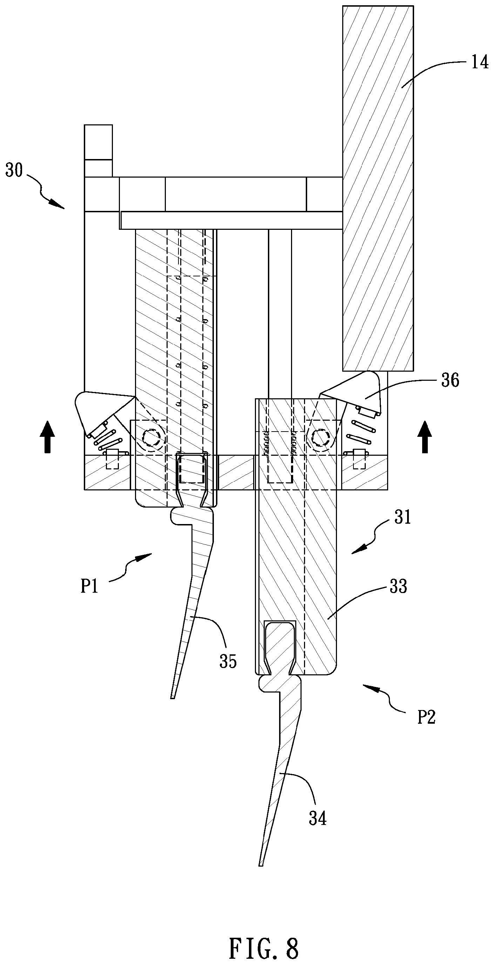

In an embodiment of the present invention, each of the two shoveling members **31** has a slide block **33,** wherein one of the shoveling members **31** has a first shovel **34,** and the other shoveling member **31** has a second shovel **35.** Each slide block **33** is allowed to vertically move on the vertical movement module **30** between an upper position **PI** and a lower position **P2** (as shown by **Fig. 6** to **Fig. 8**). The first shovel **34** and the second shovel **35** are disposed on the bottom of the two slide blocks **33,** respectively. The vertical movement module **30** has two block members **36** corresponding to the two slide blocks **33,** respectively. Therefore, when each slide block **33** is at the lower position **P2** (as shown by **Fig. 7**), the slide block **33** is blocked by the corresponding block member **36** to be positioned. When the block member **36** is separated from the slide block **33** (as shown by **Fig. 8**), the slide block **33** is resiliently restored back to the upper position **P1.** In an embodiment of the present invention, the first shovel **34** has a row of screen bores **341** disposed on the upper portion of the first shovel **34,** and the second shovel **35** has two rows of screen bores **351** disposed on both the upper and lower portions of the second shovel **35.** The first shovel **34** and the second shovel **35** are applied for shoveling the cat litter in the cat litter box **11,** and the screen bores **341, 351** are applied for screening out the unused cat litter during shoveling the cat litter. However, forms of the screen bores **341, 351** in the embodiment are only for illustration of the technical features and by no means limiting the embodiment scope of the present invention.

In an embodiment, the base **10** is provided with a control member **14** corresponding to the vertical movement module **30.** During the vertically upward movement of the vertical movement module **30** with respect to the corresponding slide block **33,** the slide block **33** is pushed to the lower position **P2** by the control member **14** (as shown by **Fig. 7**). Similarly, during the vertically upward movement of the vertical movement module **30** with respect to the block member **36,** the block member **36** is pushed by the control member **14** to be separated from the slide block **33**(as shown by **Fig. 8**), such that the slide block **33** is resiliently restored back to the upper position **P1.** With the pushing motion of the control member **14,** the two shoveling member **31** are able to be alternately applied for shoveling the cat litter.

In an embodiment of the present invention, the base **10** has a sensor **41** electrically connected with the control module **40** for sensing if the cat is in the cat litter box **11.** Preferably, the sensor **41** is a weight sensor for sensing the weight of the cat litter box **11.** When the cat enters the cat litter box **11** to excrete feces, the sensor **41** senses that the weight of the cat litter box **11** becomes heavier; when the cat finishes the excretion and leaves the cat litter box **11,** the sensor **41** senses that the weight of the cat litter box **11** becomes lighter. Then, via the control of the controlling module **40,** the shoveling member **31** is driven to shovel the cat litter in the cat litter box **11,** whereby the feces are shoveled out from the cat litter box **11.** The sensor **41** is not limited to a weight sensor; in other embodiments, the sensor **41** is also allowed to be an infrared sensor (not shown), so as to identify the cat by the body temperature of the cat when the cat enters or leave the cat litter box **11.**

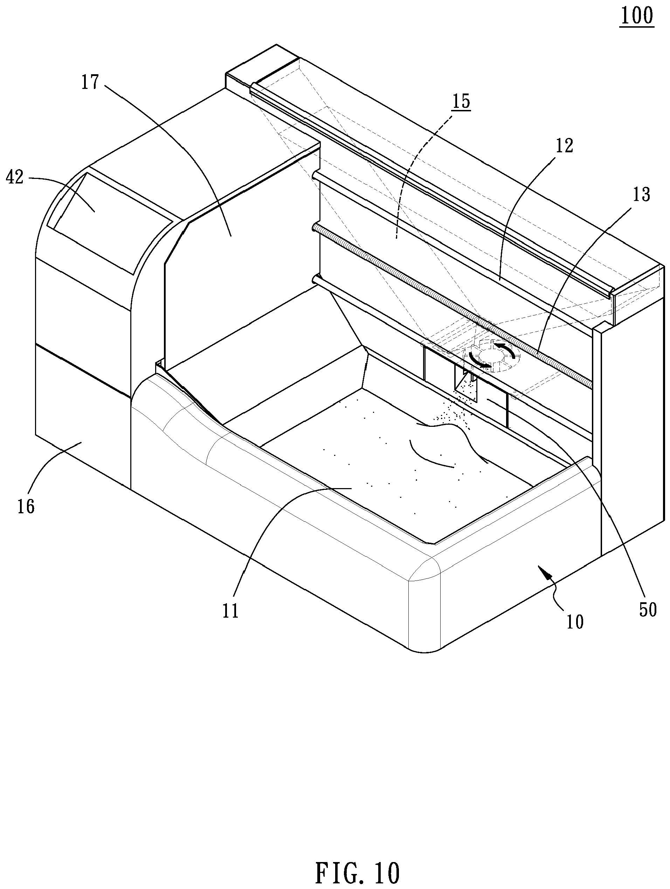

In an embodiment of the present invention, the base **10** has a storage room **15** disposed besides the cat litter box **11** for storing new cat litter. Also, the storage room **15** has a cat litter supplying module **50** electrically connected with the control module **40** for replenishing the new cat litter into the cat litter box **11** (as shown by **Fig. 10**). In the embodiment, the control module **40** is disposed on the base **10** and has a control panel **42,** such that, through the operation on the control panel **42,** the cat litter supplying module **50** is driven to supply the new cat litter into the cat litter box **11.** Also, in the embodiment, the control module **40** has a warning unit **43.** When the cat litter stored in the storage room **15** is less than a predetermined amount (such as 1 kilo), the warning unit **43** sends out a warning for reminding the user to add new cat litter into the storage room **15,** so as to prevent the insufficiency of the cat litter storage.

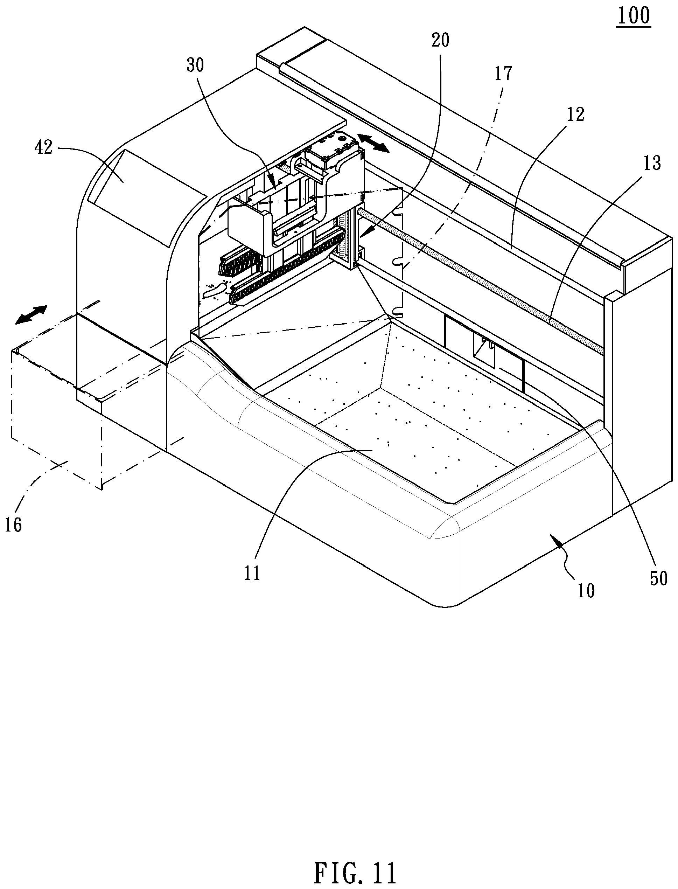

In an embodiment, the base **10** has a feces container **16** disposed on one side away from the cat litter box **11** for housing the shoveled cat feces. Also, the feces container **16** is able to be taken out from the base **10** (as shown by **Fig. 11**) for cleansing the cat feces therein. In addition, the cat litter box **11** has a bevel **111** disposed on one side of the feces container **16.** When the shoveling member **31** shovels the cat feces into the feces container **16,** the shoveling member **31** is controlled to shake on the bevel **111,** such that the unused cat litter shoveled up by the shoveling member **31** fall back to the cat litter box **11** via the bevel **111,** thus preventing a waste of the cat litter. When the cat feces housed in the feces container **16** has to be cleansed (such as the amount thereof is more than 10 kilos), the warning is also able to be sent by the warning unit **43** for reminding the user to cleanse the cat feces.

In an embodiment of the present invention, the base **10** has a block door **17** on one side thereof adjacent to the cat litter box **11** for blocking the horizontal movement module **20** and the vertical movement module **30.** When the horizontal movement module **20** transversely move toward the cat litter box **11,** the block door **17** is pushed by the horizontal movement module **20** to open (as shown by **Fig. 11** to **Fig. 12**). When the horizontal movement module **20** transversely move back toward the feces container **16,** the block door **17** is pushed by the horizontal movement module **20** to close.

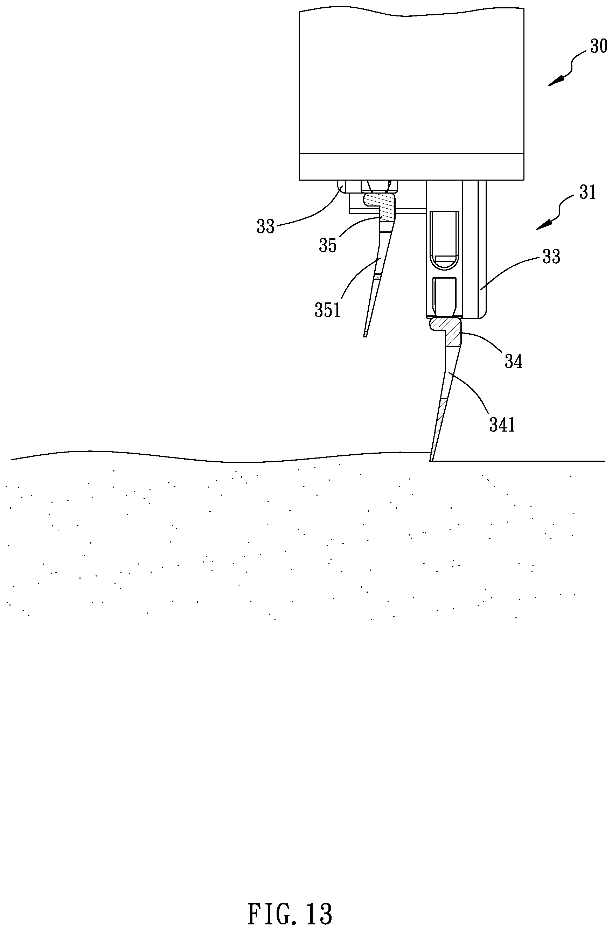

During the operation of the automatic cat litter box cleansing structure **100,** when the first shovel **34** is first applied for cleansing the cat litter in the cat litter box **11,** following steps are carried out: the control member **14** pushing the slide block **33** and the first shovel **34** to the lower position **P2** via the transverse movement of the horizontal movement module **20** and the longitudinal movement of the vertical movement module **30;** the vertical movement module **30** longitudinally moving upward with respect to the horizontal movement module **20;** the horizontal movement module **20** transversely moving to above the cat litter box **11** for open the block door **17** (ah shown by **Fig. 11** to **Fig. 12**); the vertical movement module **30** longitudinally moving lower with respect to the horizontal movement module **20** for placing the first shovel **34** to a shallow position (as shown by **Fig. 13**); the horizontal movement module **20** transversely moving to carry the cat feces toward the feces container **16** and shaking on the bevel **111,** whereby the unused cat litter falls back to the cat litter box **11;** and the first shovel **34** carrying the cat feces to the feces container **16** in which the cat feces are housed. Therefore, the first shovel **34** finishes the cat litter cleansing operation in the cat litter box **11.**

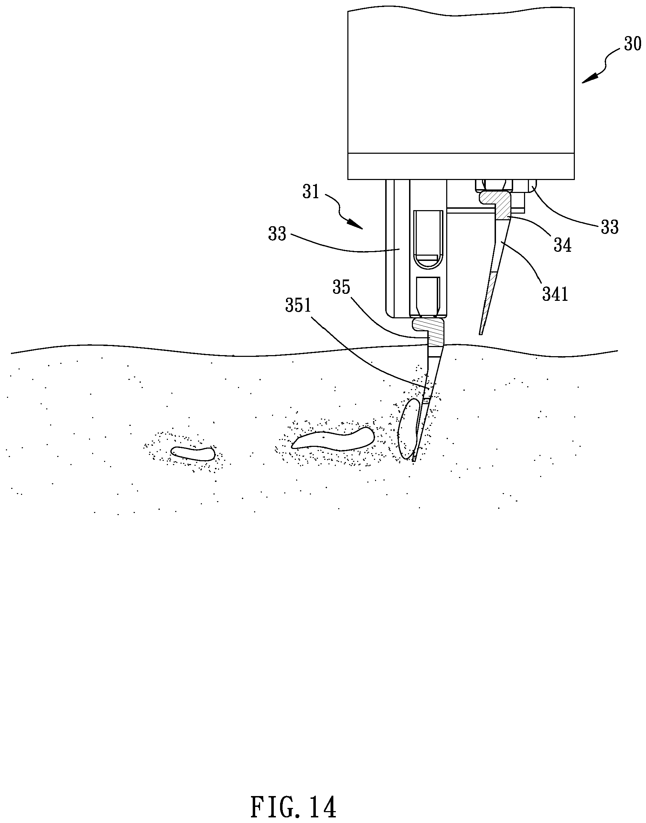

After the completion of the cat litter cleansing operation of the first shovel **34,** the horizontal movement module **20** again moves to the control member **14** and longitudinally move upward with the vertical movement module **30** with respect to the block member **36.** The block member **36** is pushed by the control member **14** to be separated from the slide block **33,** such that the first shovel **34** is restored to the upper position **P1.** The second shovel **35** moves between the lower position **P2** and the upper position **P1.** Similarly, the second shovel **35** moves via the transverse movement of the horizontal movement module **20** and the longitudinal movement of the vertical movement module **30,** and the control member **14** then pushes the slide block **33** and the second shovel **35** together, such that the second shovel **35** is allowed to shovel the cat litter at a deeper position (as shown by **Fig. 14**) for carrying out the cat litter cleansing operation in the cat litter box **11.** Also, the block member **36** is pushed by the control member **14** to be separated from the slide block **33,** whereby the second shovel **35** is restored back to the upper position **P1.**

With the foregoing configuration, the present invention achieves following advantageous function. The horizontal movement module **20** is controlled by the control module **40,** so as to transversely move along the area in which cat litter box **11** is disposed, and the vertical movement module **30** longitudinally move with respect to the horizontal movement module **20.** Therefore, when a cat finishes feces excretion in the cat litter box **11,** the shoveling member **31** is driven by the horizontal movement module **20** to shovel the cat litter in the cat litter box **11,** so as to automatically cleanse the cat feces away from the cat litter box **11.** Compared with the conventional cleansing method which manually cleanses or applies a semi-automatic cat litter box to cleanse cat feces, the present invention achieves a greater convenience of automatic cleansing the cat litter box **11.** Also, the user of the present invention is prevented from forgetting to cleanse the cat feces, and further prevents environmental odor from occurring thereby.

In addition, when a cat excretes feces in the cat litter box **11,** the cat feces will be combined with the cat litter to form larger bulks, which are then shoveled away from the cat litter box **11** by the shoveling member **31.** As a result, the cat litter in the cat litter box **11** is shoveled away, causing a consumption of the cat litter reserve in the cat litter box **11.** With the storage room **15** housing a certain amount of new cat litter, upon the weight of cat litter in the cat litter box **11** decreasing to a certain level, the cat litter supplying module **50** will replenish the new litter into the cat litter box **11,** thereby maintaining a sufficient amount of cat litter in the cat litter box **11** and continuously facilitating the cat feces cleansing function.

Although particular embodiments of the invention have been described in detail for purposes of illustration, various modifications and enhancements may be made without departing from the scope of the invention. Accordingly, the invention is not to be limited except as by the appended claims.

## Claims

1. An automatic cat litter box cleansing structure (100), comprising:
a base (10) on where a cat litter box (11) is disposed;
a horizontal movement module (20) movably disposed on the base (10) and transversely moving along an area in which the cat litter box (11) is disposed;
a vertical movement module (30) movable disposed on the horizontal movement module (20) and longitudinally moving with respect to the horizontal movement module (20), the vertical movement module (30) further having a shoveling member (31); and
a control module (40) applied for controlling the horizontal movement module (20) and the vertical movement module (30) to drive the shoveling member (31) to shovel a cat litter in the cat litter box (11), such that the cat litter is shoveled away from the cat litter box (11).

2. The automatic cat litter box cleansing structure (100) of claim 1, wherein the base (10) has a plurality of transverse guidance rods (12); the horizontal movement module (20) is disposed on the transverse guidance rods (12) and driven by a transverse thread rod (13) to transversely move on the transverse guidance rods (12).

3. The automatic cat litter box cleansing structure (100) of claim 2, wherein the horizontal movement module (20) has a gear set (21), and the vertical movement module (30) has a teeth row (32) engaged with the gear set (21); the gear set (21) is driven to rotate clockwise or counterclockwise by a longitudinal thread rod (23) which is motivated by a motor (22), such that the gear set (21) motivates the teeth row (32) for driving the vertical movement module (30) to longitudinally move.

4. The automatic cat litter box cleansing structure (100) of claim 3, wherein the shoveling member (31) comprises a slide block (33) and a shovel member (34, 35); the slide block (33) longitudinally move on the vertical movement module (30) between an upper position (PI) and a lower position (P2); the shovel member (34, 35) is disposed on a bottom portion of the slide block (33) and has a screen bore (341, 351); the vertical movement module (30) has a block member (36) corresponding to the slide block (33), such that when the slide block (33) is at the lower position (P2), the slide block (33) is blocked by the block member (36) to be positioned, and when the block member (36) is separated from the slide block (33), the slide block (33) is resiliently restored to the upper position (PI).

5. The automatic cat litter box cleansing structure (100) of claim 4, wherein the base (10) has a control member (14) corresponding to the vertical movement module (30); when the vertical movement module (30) longitudinally move upward with respect to the slide block (33), the slide block (33) is pushed by the control member (14) to the lower position (P2); when the vertical movement module (30) longitudinally move upward with respect to the block member (36), the block member (36) is pushed by the control member (14) to be separated from the slide block (33).

6. The automatic cat litter box cleansing structure (100) of claim 5, wherein a plurality of the shoveling members (31) are included, such that the shoveling members (31) are alternately pushed by the control member (14) to operate.

7. The automatic cat litter box cleansing structure (100) of claim 1, wherein the base (10) has a sensor (41) which is electrically connected with the control module (40) for sensing if a cat is in the cat litter box (11).

8. The automatic cat litter box cleansing structure (100) of claim 7, wherein the sensor (41) is selected from a group consisting of infrared sensor and weight sensor.

9. The automatic cat litter box cleansing structure (100) of claim 1, wherein the base (10) has a storage room (15) disposed besides the cat litter box (11) for housing new cat litters, and the storage room (15) has a cat litter supplying module (50) which is electrically connected with the control module (40) for replenishing the new cat litter from the storage room (15) into the cat litter box (11).

10. The automatic cat litter box cleansing structure (100) of claim 9, wherein the control module (40) has a warning unit (43) which sends out a warning when a weight of the new litter in the storage room (15) is lower than a predetermined weight for indicating that the new cat litter in the storage room (15) needs to be replenished.

11. The automatic cat litter box cleansing structure (100) of claim 1, wherein the base (10) has a feces container (16) disposed on one side of the base (10) away from the cat litter box (11) for housing cat feces that are shoveled from the cat litter box (11), and the feces container (16) is able to be taken out from the base (10) for cleansing the cat feces.

12. The automatic cat litter box cleansing structure (100) of claim 11, wherein the cat litter box (11) has a bevel (111) on one side adjacent to the feces container (16), such that when the cat feces are shoveled by the shoveling member (31) to the feces container (16), the shoveling member (31) is controlled to shake on the bevel (111), whereby the cat litters fall back to the cat litter box (11) via the bevel (111).

13. The automatic cat litter box cleansing structure (100) of claim 1, wherein the control module (40) has a control panel (42) disposed on the base (10).

14. The automatic cat litter box cleansing structure (100) of claim 1, wherein the base (10) has a block door (17) on one side adjacent to the cat litter box (11) for blocking the horizontal movement module (20) and the vertical movement module (30); when the horizontal movement module (20) transversely move toward the cat litter box (11), the block door (17) is pushed to open.
